# EUROPEAN PATENT APPLICATION

(11) **EP 3 939 811 A1**
(43) Date of publication of application: **19.01.2022**
(21) Application number: 20770146.7
(22) Date of filing: 13.03.2020
(51) Int. Cl.: B60G 11/02, F16F 1/20

(54) **NOISE-REDUCING ELEMENT FOR A LEAF SPRING**

(30) Priority: 14.03.2019 BR 202019004979 U
(71) Applicant: RASSINI - NHK AUTOPEÇAS LTDA., 09772-040 São Bernardo do Campo (BR)
(72) Inventor: FURTADO, Danilo, São Bernardo do Campo - SP (BR); DOS SANTOS, Marcos, Sitio da Figueira São Paulo - SP (BR); MANINI, Ricardo Guedes, São Bernardo do Campo - SP (BR)
(74) Representative: Patentanwälte Geyer, Fehners & Partner mbB
(86) International application number: PCT/BR2020/050088
(87) International publication number: WO 2020/181351

(57) **Abstract**

The anti-noise element (EAR) is applied to separate the end portions of each two spring blades (LM), superimposed and adjacent, of a spring bundle (FM) and comprises a metal plate (10) covered by a coating (20) in polyamide-11 thermoplastic resin and incorporating a median protrusion (12) to be fitted and retained into a corresponding hole (F) provided at the end portion of the spring blade (LM) against which the anti-noise element (EAR) is seated and retained.

## Description

### Field of invention

This invention refers, in the nature of utility model, to an element to be positioned between the blades of a spring bundle usually applied in the suspension of vehicles and road implements, usually cargo or passenger transport vehicles, to reduce or even eliminate noise caused by the frictional movement between adjacent spring blades of the spring bundle, when the suspension is working during the running of the vehicle.

### State of the art

Spring bundles applied to road vehicles are known in the state of the art and comprises each one an assembly of spring blades with equal or distinct lengths, mounted superimposed to each other, to flex together, by reacting to the loads that are imposed on them.

These wide-use spring bundles of spring blades present the inconvenience of producing loud and unpleasant noises when the frictional movement of the adjacent spring blades of each bundle, when they are flexed under the different loads imposed on them by the vehicle in movement. This inconvenience is particularly unpleasant for the vehicle passengers.

According to one of the well-known constructive solutions for these noise eliminating elements, each element being formed by a plate or blade having a usually rectangular and/or circular contour, formed in polymeric material and or composite rubber, with or without reinforcement additives in its composition, and presenting a width adjusted to the width of the blades of the spring bundle and an extension, in the longitudinal direction of the bundle, only sufficient to prevent direct contact between the end portions of each two adjacent spring blades of the spring bundle. Each element incorporates at least one protrusion, to be fitted into a corresponding hole, provided in the adjacent spring blade of each pair of blades to be separated by the anti-noise element, to ensure the correct positioning of the element in the spring bundle.

These elements with anti-noise function, formed in polymeric material and/or composite rubber, have limited service life, since said material drains or wears out due to the workload and/or friction to which they are subjected, until their operational failure occurs, which may cause the release of the anti-noise element of the spring bundle or its displacement between the two blades, towards the central region of the spring blades, which may cause premature fracture of blades of the spring bundles. The anti-noise element loses its function in both of the above mentioned failures.

In another known construction for the anti-noise element, each one is formed by a metal plate or sheet that incorporates, on its upper face, by bonding, vulcanization or other suitable means, a layer of composite rubber and, in its lower face, at least one lower positioning protrusion, also generally metallic, for example a stud, and to be fitted and locked into a corresponding hole provided in the lower spring blade of each pair of blades to be separated by the anti-noise element. This composite element also has a width adjusted to the width of the blades of the spring bundles and a longitudinal extension just enough to prevent direct contact between the end portions of each two adjacent spring blades of the spring bundle.

These elements, formed in metal sheet and carrying a rubber pad, also have limited useful life due to wear out by friction and the workload to which the rubber pad is submitted. In addition, these elements with rubber pads are retained in the spring bundles, usually by means of studs and nuts, requiring a longer production time and increasing the costs of the product in relation to the polymeric anti-noise element.

Another known construction is disclosed in patent document PI 0503283-0. In this case, each anti-noise element comprises a rectangular steel blade, of reduced thickness and having width and length corresponding to those of the two adjacent blades of the spring bundles, between which the element will be mounted. Each anti-noise element has at least its end portions coated, superiorly and inferiorly, with a layer of elastomeric material which is preferably defined by vulcanized rubber, but which can be formed from various synthetic or natural materials. This anti-noise element can be in the form of a smooth metallic blade, being kept in position in the spring bundle, by means of the usual pin or central rod that passes through all the blades and also by the usual retaining clamps provided in the spring bundle. Furthermore, the steel blade element can include, on one face, drawn protrusions in the form of ribs and, on the opposite face, corresponding recesses.

This previous construction, besides presenting the same deficiencies of the solution that uses a metal sheet carrying a rubber pad, suggests the use of steel blades that extend throughout the entire length of the pair of spring blades in which it is mounted, substantially increasing the construction costs of the spring bundle and increasing unnecessarily its final weight.

### Summary of the invention

Due to the deficiencies of the known solutions, as commented above, the present invention aims to provide an anti-noise element of simple construction, relatively low cost, presenting easy and safe assembly in a bundle of laminar springs and presenting an increased service life compared to known construction solutions.

### Brief description of the drawings

The present anti-noise element will be described below, referring to the attached drawings, in which:
Figure 1 represents a side elevational view of one of the end portions of a typical bundle of spring blades, provided with an anti-noise element according to the invention and positioned between the ends of each two adjacent springs blades;
Figure 2 represents an isometric and exploded perspective view, illustrating an end portion of a spring blade and the corresponding anti-noise element, according to a first embodiment and to be seated and retained on said spring blade;
Figure 3 represents an isometric perspective view of the anti-noise element, according to its first embodiment shown in Figure 2;
Figure 4 represents a cross-sectional view of the anti-noise element, which view is taken according to the line IV-IV in Figure 3 and showing the element mounted between two adjacent spring blades which are shown in cross-section;
Figure 5 represents an isometric perspective view of the anti-noise element constructed according to a second embodiment; and
Figure 6 represents a cross-sectional view of the anti-noise element in its second embodiment, the view being taken according to the line VI-VI in Figure 5 and having the element mounted between two adjacent spring blades, which are shown in cross-section.

### Description of the invention

As already previously mentioned and illustrated in the attached drawings, the present anti-noise element EAR is positioned between the end portions of each two spring blades LM of a spring bundle FM that is usually applied in the suspension of vehicles and road implements and formed by an assembly of spring blades LM. In the illustrated configuration, the spring blades LM have different lengths, although it is possible to use spring blades LM with the same length to form a spring bundle FM. The spring blades LM are mounted superimposed each other, with or without the provision of retaining elements ER of aligning function known in the art.

It should be understood that the term spring blade defines not only a spring blade operating as a suspension spring, but also an eventual safety spring blade, arranged in the lower region of the spring bundle and which does not operate as suspension spring rather as an additional safety element in the event of a break of the spring bundle, which safety element may comprise one or multiple suspension spring blades.

According to the present invention, each anti-noise element EAR comprises a metallic plate 10, in steel or any suitable alloy, of variable contour, polygonal, circular or elliptical, with maximum width adjusted to the total width of the spring bundle FM, provided or not with its retaining elements ER, and having an extension, in the length direction, approximately equal to its width and sufficient to prevent direct contact between the superposed end portions of two adjacent spring blades LM.

In the two illustrated embodiments, each metal plate 10 has a thickness smaller than the thickness of the spring blades LM, generally smaller than half the thickness of the adjacent spring blades LM, each metal plate 10 being covered with a coating 20 in the form of a layer of thermoplastic resin known as polyamide-11, with the thickness of the coating 20 ranging from 0.01mm to 2.00mm, as a function of the dimensional characteristics of the spring blades LM of the spring bundle FM in which the anti-noise element EAR will be applied.

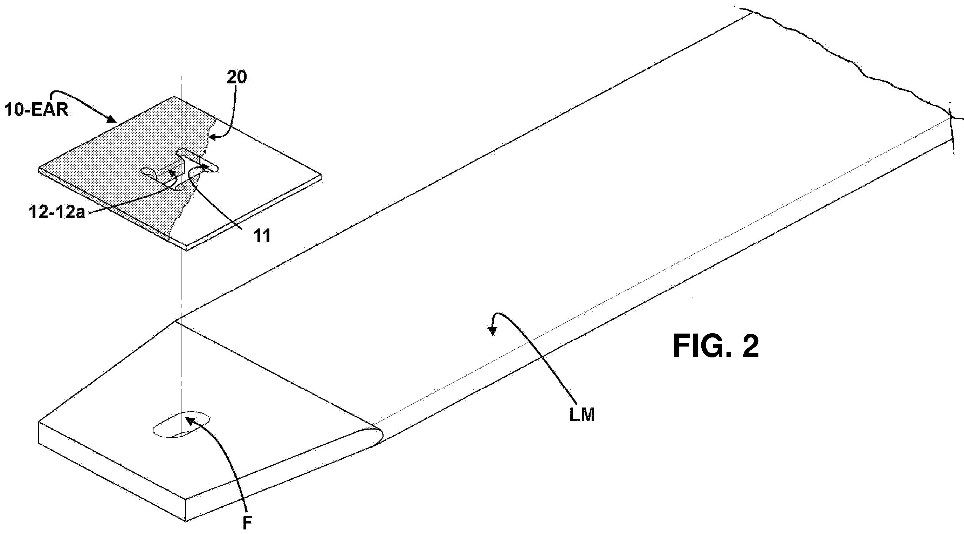

The coating 20 is defined by the application, by immersion or any other suitable process, of the thermoplastic resin defined by polyamide-11, allowing to obtain an anti-noise element that can be used in any type of spring bundle FM, being of easy construction and assembly, with competitive cost and presenting superior durability when compared to that of currently known solutions. The coating 20 is partially illustrated on the anti-noise element EAR (see figures 2, 3 and 5).

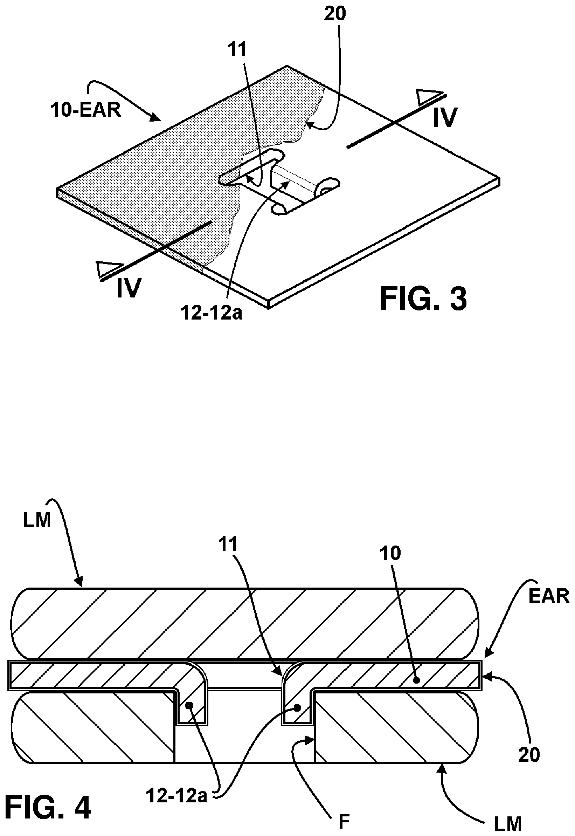

As illustrated in figures 3 and 4, the anti-noise element EAR can be defined, in a first embodiment, by a metal plate 10, with the dimensions of width, length and thickness as defined above and incorporating a median protrusion 12 that, in the illustrated constructions, is defined by a median drawn 11, said median protrusion 12 being designed to be fitted and retained, against displacements, into a corresponding hole F provided in the end portion of the spring blade LM against which the anti-noise element EAR is seated and retained.

In the example of figures 3 and 4, the median drawn 11 produces a median protrusion 12 defined by a pair of parallel ribs 12a, spaced apart and arranged in the longitudinal direction of the spring bundle FM, to be fitted into the hole F of the end portion of a respective spring blade LM, ensuring the correct and safe positioning of the anti-noise element EAR in the spring bundle FM.

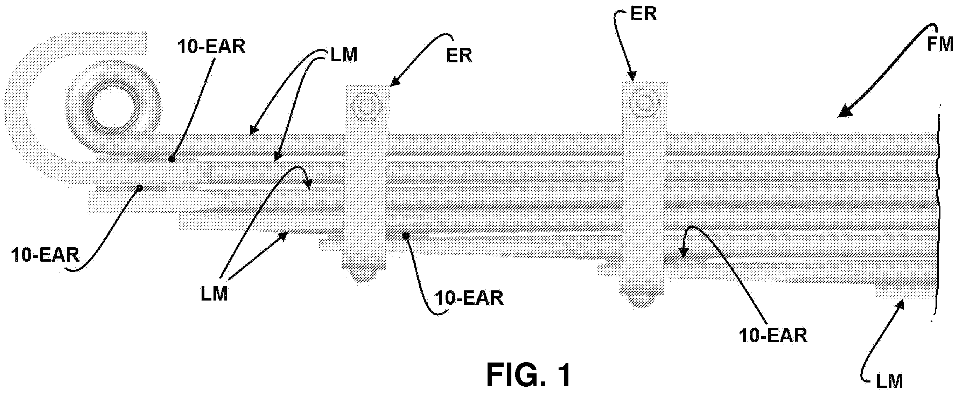

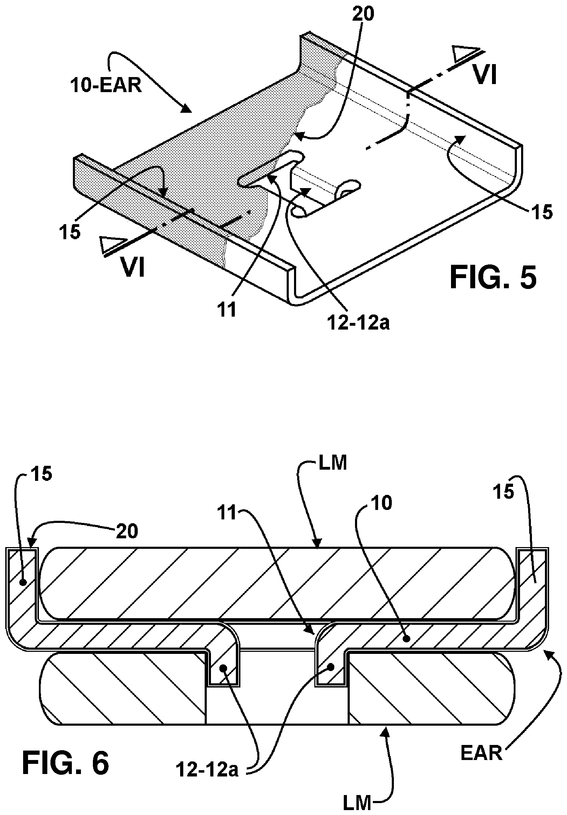

Figures 5 and 6 illustrate a second embodiment for the anti-noise element EAR, presenting the same characteristics as described above in relation to the first embodiment illustrated in figures 3 and 4 and that receive the same reference numbers. However, in the second embodiment, the metal plate 10 incorporates, in each longitudinal edge, a side flap 15 to be seated against an adjacent side edge of a spring blade LM immediately adjacent, superiorly or inferiorly, in the spring bundle FM. In figure 6, it is illustrated only the seating of the side flaps 15 of the metal plate 10 against the side edge of the spring blade LM positioned immediately above. However, it should be understood that the metal plate 10 can be mounted in an inverted position relative to that illustrated in Figure 6, with its side flaps 15 seated against the opposite side edges of a spring blade LM positioned immediately below. Thus, in the construction proposed herein, in which the metal plate 10 incorporates the side flaps 15, the retaining elements ER, illustrated in Figure 1, can be totally or partially removed from the spring bundle FM.

In both the first and second embodiments, preferably the entire metal plate 10, including the median protrusion 12 and eventual side flaps 15, is covered with the coating 20 in polyamide-11, avoiding any direct metallic contact between the anti-noise element itself and the two adjacent spring blades LM.

Although only two embodiments of the anti-noise element of the invention have been presented herein, changes can be made to the shape and arrangement of the component parts of the element, without deviating from the proposed constructive concept.

## Claims

1. An anti-noise element for a spring bundle of the type formed by an assembly of spring blades (LM) mounted superimposed each other and having the end portions of each two adjacent spring blades (LM) separated by a respective anti-noise element (EAR) which is **characterized by** the fact that it comprises a metal plate (10), with a width adjusted to the total width of the spring bundle (FM) and with a length preventing the direct contact between the end superimposed portions of two adjacent spring blades (LM), said metal plate (10) being covered by a coating (20) in thermoplastic polyamide-11 resin and incorporating a median protrusion (12) to be fitted and retained into a corresponding hole (F) provided in the end portion of the spring blade (LM) against which the anti-noise element (EAR) is seated and retained.

2. The anti-noise element, according to claim 1, **characterized in that** the coating (20) is defined by a polyamide-11 resin layer, with a thickness from 0.01mm to 2.00mm.

3. The anti-noise element, according to any one of claims 1 or 2, **characterized in that** the metal plate (10) has a thickness smaller than the thickness of the spring blades (LM).

4. The anti-noise element, according to any one of claims 1, 2 or 3, **characterized in that** the median protrusion (12) of the metal plate (10) is defined by a median drawn (11) in the latter.

5. The anti-noise element, according to claim 4, **characterized in that** the median protrusion (12), formed by the median drawn (11), is defined by a pair of parallel ribs (12a), spaced to each other, arranged in the longitudinal direction of the spring bundle (FM) and fitted into the hole (F) of the end portion of a respective spring blade (LM).

6. The anti-noise element, according to any one of claims 1 to 5, **characterized in that** the metal plate (10) incorporates, at each longitudinal edge, a side flap (15) to be seated against an adjacent side edge of the spring blade (LM) immediately adjacent, superiorly or inferiorly, in the spring bundle (FM).

7. The anti-noise element, according to any one of claims 1 to 6, **characterized in that** the entire metal plate (10), including the median protrusion (12) and eventual upper side flaps (15), is covered with the coating (20) in polyamide-11.
